# EUROPÄISCHE PATENTSCHRIFT

(11) **EP 4 269 229 B1**
(45) Veröffentlichungstag und Bekanntmachung des Hinweises auf die Patenterteilung: **28.10.2026**
(21) Anmeldenummer: 23167882.2
(22) Anmeldetag: 14.04.2023
(51) Int. Cl.: B64C 1/06, B64D 11/00, B32B 7/12, G09F 13/04

(54) **FARBWECHSELBAUTEIL FÜR KABINENOBERFLÄCHEN**
PAINT-CHANGING COMPONENT FOR CABINE SURFACES
COMPOSANT DE CHANGEMENT DE COULEUR POUR SURFACES DE CABINE

(30) Priorität: 29.04.2022 DE 102022110491
(43) Veröffentlichungstag der Anmeldung: 01.11.2023
(73) Patentinhaber: Diehl Aerospace GmbH, 88662 Überlingen (DE)
(72) Erfinder: Schmid, Frank, 92284 Poppenricht (DE)
(74) Vertreter: Diehl Patentabteilung

(56) Entgegenhaltungen:
- WO-A1-2023/151791
- DE-A1- 102018 127 044
- US-A1- 2013 161 971
- US-A1- 2019 039 734
- US-A1- 2020 333 677
- US-A1- 2022 069 402
- US-B2- 10 783 838

## Beschreibung

Die Erfindung betrifft eine Oberfläche eines Bauteils, wobei die Oberfläche - in einem bestimmungsgemäßen Montagezustand des Bauteils in einer Passagierkabine eines Passagierflugzeuges - eine Sichtfläche in der Passagierkabine bildet. Solche Bauteile bzw. Oberflächen sind z.B. eine Seitenwand oder eine Decke der Passagierkabine bzw. entsprechende Verkleidungen, ein Staufach, aber auch eine PSU (Passenger Service Unit) oder ein Sign, z.B. eine Leuchtanzeige für einen Frei- oder Belegt-Zustand eines Waschraums.

Aus der DE 10 2018 127 044 A1 ist ein Verkleidungsbauteil für eine Kabine eines Transportmittels bekannt, das mindestens eine Anzeigeeinheit und mindestens eine Steuereinheit aufweist, die durch Bedrucken und Bestücken mindestens einer Folie, die auf ein Verkleidungselement gebracht wird, hergestellt werden. Die Steuereinheit kann drahtlos mit einer externen Elektronikeinheit kommunizieren, so dass das Verkleidungsbauteil zur Realisierung von elektronischen Funktionen lediglich einen Stromanschluss benötigt. Durch Austauschen der mindestens einen Folie können leicht Funktionen nachgerüstet werden. Die Anzeigeeinheit könnte einen Bildschirm aufweisen, der beispielsweise auf OLED oder einer hinterleuchteten TFT-Aktivmatrix basiert.

Aus der US 2013 / 0161971 A1 ist eine automatisch dimmende Fensteranordnung für ein Fahrzeug bekannt.

Aus der US 2020 / 0333677 A1 ist eine energieautonome Anzeigeeinheit für eine Kabine eines Fahrzeuges bekannt.

Aus der nachveröffentlichten WO 2023 / 151791 A1 ist ein dekoratives Verkleidungselement zur Nutzung in einem Inneren eines Fahrzeuges bekannt.

Aus der US 2022 / 0069402 A1 ein Feuerschutzgerät mit einem Verbundsystem, ein Verbundsystem und ein Batteriepaket mit dem Feuerschutzgerät bekannt.

Aus der US 2019 / 0039734 A1 ist ein Gerät zur Nutzung in einem Fahrzeug bekannt, das ein Unterhaltungssystem enthält.

Aus dem US Patent US 10,783,838 B2 ist ein Anzeigegerät für eine Sitzplatzkennung für ein Fahrzeug mit einem variablen Montageort bekannt.

Aufgabe der vorliegenden Erfindung ist es, Verbesserungen in Bezug auf ein solches Bauteil für eine Passagierkabine eines Passagierflugzeuges vorzuschlagen.

Die Aufgabe wird gelöst durch ein Bauteil gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Bauteil ist ein Bauteil für eine - insbesondere bestimmungsgemäße - Passagierkabine eines Passagierflugzeuges. Das Bauteil weist einen Grundkörper (auch "Basisteil") auf. Der Grundkörper weist eine Oberfläche auf. Das Bauteil enthält einen Schichtaufbau. Der Schichtaufbau ist auf der Oberfläche des Grundkörpers angebracht bzw. dort befestigt und gehalten. Der Schichtaufbau enthält mindestens zwei, insbesondere drei oder mehr, Schichten. Die eine der mindestens zwei Schichten ist jedenfalls eine Aktivschicht. Die andere Schicht ist jedenfalls eine Klebstoffschicht. Die Klebstoffschicht ist zwischen der Aktivschicht und der Oberfläche angeordnet.

Die Aktivschicht enthält wenigstens einen Flächenabschnitt. "Fläche" bezieht sich hier auf die schichtartigkeit der Aktivschicht und könnte auch als Schichtabschnitt, Teilbereich o.ä. bezeichnet werden. Jeder der Flächenabschnitte ist jeweils aus einer elektrisch steuerbaren Farbwechselfolie gebildet. Die Folien mehrerer oder aller Abschnitte können auch zusammenhängen, d.h. Teilbereiche einer einzigen Folie sein. Durch die insbesondere elektrische Steuerung bzw. Ansteuerung der Farbwechselfolie ändert diese ihr optisches Aussehen, ihre optischen Eigenschaften usw. "Farbwechsel" ist hier weit zu verstehen, gemeint sind auch z.B. schwarz-grau-weiß-Unterschiede oder unterschiedliche Transparenzen der Folie. Auch "Folie" ist hier im Sinne einer "Schicht" weit zu verstehen. Insbesondere handelt es sich jedoch tatsächlich um eine Folie, d.h. eine biegsame / verformbare Struktur.

Zumindest ein Teil der Farbwechselfolie bildet eine bestimmungsgemäße Sichtfläche in der Passagierkabine. Mit anderen Worten ist die Farbwechselfolie bzw. ein von deren Ansteuerung bewirkter optischer Effekt an der Sichtseite des Bauteils von einem Betrachter wahrnehmbar. Insbesondere ist die Farbwechselfolie zur Sichtseite hin also nur noch von optisch zumindest teiltransparenten Schichten des Schichtaufbaus bedeckt.

Die oben genannten weiteren Schichten können sich entweder zwischen Aktivschicht und Oberfläche oder auch jenseits der Aktivschicht auf deren, von der Oberfläche abgewandten Seite befinden. Insbesondere sind weitere Klebstoffschichten vorgesehen, falls zwei benachbarte Schichten und / oder die Oberfläche nicht selbst ausreichend klebend sind, also nicht ausreichend fest aneinander befestigbar sind, um einen Grundkörper mit stabilem Schichtaufbau zu bilden.

Die Oberfläche ist insbesondere eine Flachseite des Bauteils, zum Beispiel eines Bauteils in Form eines flächenhaft ausgedehnten Paneels.

"Bestimmungsgemäß" heißt, dass z.B. das Bauteil auf eine bestimmte oder einen bestimmten Typ von Passagierkabine / Flugzeug konstruktiv abgestimmt ist und für den Einsatz dort eingerichtet ist; z.B. für die dadurch bestimmten Geometrieanforderungen usw. ausgelegt ist. Mit anderen Worten wird insbesondere eine betreffende Passagierkabine / Flugzeug als bekannt hinsichtlich seiner Geometrie, Größe, Materialeigenschaften usw. vorausgesetzt.

Gemäß der Erfindung sind variantenreiche Bauteile möglich, die das Erscheinungsbild der Kabine veränderbar machen. Hierzu muss lediglich die Farbwechselfolie (anders) angesteuert werden. Diese verändert ihre optischen Eigenschaften bzw. ihr optisches Erscheinungsbild - insbesondere auch durch Zusammenwirken mit anderen Schichten oder dem Grundkörper - und damit ändert sich auch das Erscheinungsbild der Oberfläche.

Die Farbwechselfolie ist eine nicht selbstleuchtende Passivfolie, die in ihrem Transmissionsgrad und/oder Reflexionsgrad für (insbesondere sichtbares) Licht veränderbar ist. Eine solche Folie ist insbesondere elektronisches Papier, auch als "E-Ink-Papier / Folie" bekannt oder eine Elektrolumineszenz-Folie.

In einer nicht zur Erfindung gehörenden Ausführungform gilt: Die Farbwechselfolie ist eine steuerbar Licht aussendende, also in diesem Fall selbstleuchtende, Leuchtfolie. Eine solche Folie ist zum Beispiel eine OLED-(Display-) Folie. "Selbstleuchtend" bedeutet, dass diese wahlweise, also je nach Ansteuerung bzw. Betriebsart Licht erzeugt und aussendet oder eben nicht, insbesondere durch Zufuhr elektrischer Leistung. Die Folie kann also aktiv Licht erzeugen und aussenden. "Steuerbar" bedeutet, dass je nach Steuerzustand Licht ausgesendet wird oder nicht oder Eigenschaften des ausgesendeten Lichts gesteuert werden, z.B. dessen Helligkeit / Farbton usw.

Derartige Farbwechselfolien sind für den Einsatz in Flugzeugen besonders geeignet, da sie nur eine vergleichsweise geringe elektrische Energieaufnahme aufweisen.

In einer bevorzugten Ausführungsform enthält die Aktivschicht mehrere, nebeneinander angeordnete Flächenabschnitte von Farbwechselfolien. "Nebeneinander" bedeutet: in der Erstreckungsebene der Aktivschicht / Folie. Insbesondere sind die Flächenabschnitte einzeln ansteuerbar. So lassen sich insbesondere Anzeigen realisieren, zum Beispiel wahlweise verschiedene Buchstaben, Wörter, Symbole, Pfeile usw. darstellen, Segmentanzeigen realisieren usw.

In einer bevorzugten Variante dieser Ausführungsform sind wenigstens zwei der Flächenabschnitte einzeln (insbesondere elektrisch) ansteuerbar. Die Flächenabschnitte sind also unabhängig voneinander ansteuerbar. Dies erlaubt eine variantenreiche Gestaltung von optischen Effekten und z.B. die Umsetzung der o.g. Segmentanzeigen.

Gemäß der Erfindung enthält der Schichtaufbau als eine seiner Schichten eine brandhemmende Schicht. Diese ist insbesondere zwischen der Oberfläche und der Aktivschicht angeordnet. So können insbesondere Sicherheitsvorgaben in der Luftfahrt erfüllt werden.

Hintergund zu dieser Ausführungsform ist folgender: Für Flugzeuge, die für mehr als 20 Passagiere ausgelegt sind, muss für Kabinenteile, die größer als ein square foot sind (ca. 30x30cm = 0,09m²), der sogenannte "Heat Release Test" nach FAR/CS 25.853 APPENDIX F, PART IV/V bestanden werden. Hierbei wird eine ca. 15x15 cm große Probe eines Schichtaufbaus, also z.B. des vorliegenden Bauteils, in einer etwa 800°C heißen Umgebung mit einer Pilotflamme entzündet. In den nachfolgenden zwei Minuten darf dann maximal eine Flächenenergie von 65 kWmin/m² abgegeben werden, wobei gleichzeitig ein Peakwert von 65 kW/m² nicht überschritten werden darf.

Die Erfindung beruht nun auf folgender Idee: Um zu gewährleisten, dass oben genannter Heat Relase Test bestanden wird, sollen großflächige Kabinenteile in bestimmter Weise aufgebaut werden. Denkbar wäre eine frontseitige (zum Innenraum hinweisende), durchsichtige Brandschutzschicht (z.B. aus Glas). Die Erfindung beruht dabei auf der Erkenntnis, dass eine derartige Schicht unzulänglich sein könnte. Denn da diese aus Gewichtsgründen nur sehr dünn (<1mm) ausgeführt werden sollte bzw. kann, splittert bzw. zerbricht diese gegebenenfalls unter Hitzeeinwirkung während des Heat Release Tests. In Folge dessen wird der Test nicht bestanden.

Die Erfindung beruht daher auf der Idee, als Maßnahme eine zusätzliche brandhemmende Schicht in den Aufbau, also das erfindungsgemäße Bauteil mit einzubringen. In Folge dessen wird der Heat Release Test dann bestanden.

In einer bevorzugten Ausführungsform enthält zumindest ein Teil der brandhemmenden Schicht ein ablativ brandhemmendes Material. Insbesondere enthält die gesamte brandhemmende Schicht ein ablativ brandhemmende Material. Insbesondere ist die gesamte brandhemmende Schicht eine ablativ brandhemmende Schicht.

"Ablativ" bedeutet, dass die Brandschutzbeschichtung / -schicht kühlend wirkt. Sie enthält kristallin gebundenes Wasser, welches unter Hitzeeinwirkung verdampft und somit das damit beschichtete System, hier also den Schichtaufbau und damit das Bauteil, kühlt. Hierdurch wird eine Temperaturerhöhung durch das Feuer verzögert. In Folge dessen wird der Heat Release Test dann (besser) bestanden.

Gemäß der Erfindung bilden die brandhemmende Schicht und die Klebstoffschicht eine gemeinsame Kombinationsschicht.

Diese Ausführungsform beruht auf der Überlegung, dass - insbesondere ablative - Brandschutzschichten bzw. deren Materialien nur eine sehr bzw. vergleichsweise geringe Klebe- bzw. Haftwirkung aufweisen. Somit könnte es bei schichtweise aufgebauten Systemen zu Ablösungen oder Delaminierungen kommen. Um dies zu verhindern wird die Brandschutzschicht mit der Klebstoffschicht kombiniert. Der Klebstoffanteil übernimmt hierbei eine verbesserte Haftwirkung zwischen benachbarten Schichten; der brandhemmende Anteil bewirkt die Verbesserungen im Hinblick auf den oben genannten Heat Release Test. Somit erfüllt die Kombinationsschicht beide Aufgaben, nämlich ausreichende Haftung benachbarter Schichten und ausreichenden Brandschutz.

Gemäß der Erfindung enthält die Kombinationsschicht nebeneinander angeordnete Teilflächen. Wenigstens eine der Teilflächen ist zumindest ein Abschnitt der Klebstoffschicht; wenigstens eine der Teilflächen ist zumindest ein Abschnitt der brandhemmenden Schicht. Im Ergebnis enthält die oder besteht die Kombinationsschicht also aus Flächenabschnitten in Form von brandhemmenden Flächenabschnitten einerseits und Klebstoff-Flächenabschnitten andererseits.

Diese Ausführungsform beruht auf der Idee, die brandhemmende, insbesondere ablative, Schicht nicht vollflächig, sondern mit definierten Freiflächen auszuführen bzw. aufzubringen. Zumindest ein Teil der Freiflächen, insbesondere alle, werden dann mit geeigetem Klebstoff "gefüllt", also als Klebstoffabschnitte der Kombinationsschicht ausgeführt. Letztere vermitteln dann die - zumindest verbesserte - Haftung zweier benachbarter Schichten im Aufbau / Schichtaufbau / Bauteil.

In einer bevorzugten Ausführungsform enthält der Schichtaufbau als eine seiner Schichten eine Schutzschicht für die Aktivschicht. Die Schutzschicht bedeckt insbesondere die Aktivschicht auf der von der Oberfläche abgewandten Seite, also zur Sichtseite hin. Insbesondere ist eine weitere Klebstoffschicht zwischen Aktivschicht und Schutzschicht angeordnet. Hierdurch wird die Aktivschicht vor Beschädigung von der Sichtseite her geschützt, zum Beispiel vor anschlagenden Gegenständen und damit Kratzern, vor Stößen und damit Bruch usw.

In einer bevorzugten Ausführungsform enthält der Schichtaufbau als eine seiner Schichten eine Versteckschicht. Diese wird auch "Hidden-Design"- oder "Decor-"Schicht genannt. Die Versteckschicht ist dazu eingerichtet, die Aktivschicht zumindest zeitweise zu verbergen. Ein Betrachter, der das Bauteil von der Sichtseite her betrachtet, erkennt - in einer solchen Zeit - somit nicht, dass unterhalb der Versteckschicht die Aktivschicht verborgen liegt. Die Versteckschicht bedeckt insbesondere die Aktivschicht auf der von der Oberfläche abgewandten Seite. Insbesondere sind auch hier weitere Klebstoffschichten vorgesehen, um die Versteckschicht im Schichtaufbau einzubinden. Insbesondere ist die Versteckschicht mit einem aktiv / selbstleuchtenden Element als Teil des Bauteils (Aktivschicht mit Leuchtfolie, OLED-Folie, selbstleuchtender Grundkörper usw. siehe unten) kombiniert. Das "zumindest zeitweise" Verbergen erfolgt insbesondere dann, wenn das aktiv leuchtende Element ausgeschaltet ist, also selbst kein Licht aussendet.

In einer bevorzugten Variante der oben genannten Ausführungsformen ist - falls jeweils vorhanden - die Schutzschicht oder die Versteckschicht eine abschließende Deckschicht des Bauteils. Mit anderen Worten ist die entsprechende Deckschicht dann diejenige oberste oder letzte Schicht im Schichtaufbau, welche die Sichtseite des Bauteils bildet. Die Deckschicht bildet somit die effektive Oberfläche des gesamten Bauteils einschließlich Schichtaufbau, in diesem Bereich. Somit entstehen besonders widerstandsfähige / optisch ansprechende Bauteile.

In einer bevorzugten Ausführungsform enthält der Schichtaufbau als eine seiner Schichten eine Touchpad-Schicht. An der Touchpad-Schicht steht ein Eingabesignal zur Verfügung, das die Berührung der Touch-Schicht bzw. der Sichtseite des Bauteils / Schichtaufbaus oder einen Druck auf diese anzeigt. Mit anderen Worten kann so durch Druck auf den Schichtaufbau bzw. das Bauteil vermittels der Touchpad-Schicht ein Eingabesignal erzeugt werden, was diese Berührung / Druck (oder eben keine Berührung / Druck) widerspiegelt. Die Touchpad-Schicht ist insbesondere auf der von der Oberfläche abgewandten Seite der Aktivschicht angeordnet. Insbesondere sind auch hier weitere Klebstoffschichten vorgesehen, um die Touchpad-Schicht im Schichtaufbau fest zu integrieren. Die Touchpad-Schicht kann hierbei - bezogen auf ihre Erstreckungsebene - sowohl ein einzelnes Sensorfeld (Eingabe einer Berührung / eines Drucks) realisieren. Sie kann jedoch auch Bereichs- bzw. Flächeninformationen zur Verfügung stellen. Mit anderen Worten reagierte die Touchpad-Schicht entweder mit einem Binärwert (Berührung / Druck oder nicht). Oder es wird z.B. auch ein Ort / Bereich einer Berührung auf der Touchpad-Schicht bzw. Bewegungen usw. erfasst ("Wischbewegung", Erfassung eines oder mehrerer Bedienfinger einer Person).

In einer bevorzugten Ausführungsform enthält der Schichtaufbau als eine seiner Schichten eine steuerbar Licht aussendende, also aktiv leuchtfähige Leuchtschicht. Diese entspricht prinzipiell der o.g. Leuchtfolie, ist jedoch z.B. - im Gegensatz zu dieser - flächenhaft uniform ausgeführt. D.h., sie erzeugt im Betrieb insbesondere eine homogene Hintergrundbeleuchtung. Diese Hintergrundbeleuchtung kann dann durch die Aktivschicht strukturiert werden, indem diese z.B. ein hinterleuchtetes Muster / Logo / Text / Symbol darstellt.

In einer bevorzugten Ausführungsform weist der Grundkörper zumindest an seiner Oberfläche, insbesondere der gesamte Grundkörper, zumindest einen aktiv leuchtfähigen Abschnitt, der insbesondere den gesamten Grundkörper darstellt, auf. Der Grundkörper bildet daher insbesondere eine Lichteinheit / ein Backlight. Durch Aufbringung des Schichtaufbaus bzw. durch die Aktivschicht, wird die Lichtaustrittsfläche (also die Oberfläche des Grundkörpers) in ihrer Wirkung zur Sichtseite hin verändert (an der Oberfläche / Sichtseite des Bauteils bzw. des Schichtaufbaus). So können auch mit vergleichsweise einfachen leuchtfähigen Grundkörpern dank der Aktivschicht optisch besonders ansprechende Bauteile realisiert werden.

Leuchtfähiger Grundkörper und Integration einer Leuchtschicht / Leuchtfolie in den Schichtaufbau sind insbesondere Alternativen zueinander.

Gemäß der Erfindung ist das Bauteil eine Seitenwand, eine Decke, eine Wand eines Gepäckfaches, ein Raumteiler oder eine Partition oder zumindest ein jeweiliger Teil / Abschnitt davon, in nicht zur Erfindung gehörenden Ausführungsformen eine PSU oder eine Lichteinheit oder zumindest ein jeweiliger Teil / Abschnitt davon. Der Raumteiler schließt insbesondere Class-Divider oder Bulkheads ein. Die Lichteinheit ist insbesondere ein Akzentlicht oder ein Smart Sign. Dank der Aktivschicht entstehen somit besonders variantenreiche Kabinenoberflächen bzw. Funktionselemente bzw. deren Oberflächen.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich ein Bauteil in Form eines Farbwechselbauteils für Kabinenoberflächen und Funktionselemente (also die vorliegenden "Bauteile" im weiteren Sinne, siehe oben). Mit anderen Worten werden gemäß der Erfindung auf Kabinenoberflächen, also der Oberfläche von Bauteilen (Sidewall, Gepäckfach, Decken, Class Divider, Lichteinheiten etc.) Schichtaufbauten mit sogenannten Displayfolien (Aktivschicht) appliziert. Die Kabinenerscheinung kann damit individuell verändert werden. Weiter kann diese Folie vor eine Lichteinheit (Leuchtfolie, Leuchtschicht, leuchtfähiger Grundkörper) gebracht werden, um die Lichtaustrittsfläche zu verändern.

Die Erfindung beruht auf der grundlegenden Idee einer individuellen Anpassung des Kabinendesigns bzw. von Kabinenoberflächen auf Kundenwünsche und die gleichzeitige Einhaltung von Luftfahrtregularien, zum Beispiel durch die Integration von Brandschutzschichten.

Durch die entsprechende Wahl einer Aktivschicht können hier Effekte realisiert werden, welche vergleichbar durch ein wesentlich aufwändigeres und teureres Projektionssystem realisiert werden könnten, welches Bilder auf Kabinenoberflächen projiziert.

Gemäß der Erfindung werden also auf Kabinenoberflächen (Sidewall, Gepäckfach, Decken, Class Divider, Lichteinheiten etc.) z.B. sogenannte E-Ink-Folien oder - nicht erfindungsgemäß - OLED-Display-Folien in Form der Aktivschicht appliziert. Die E-Ink-Folie ist als Displayfolie (ähnlich zu handelsüblichen E-Ink-Readern für Bücher, Zeitschriften, ...) ausgeführt. Weiter kann diese Folie vor eine Lichteinheit gebracht werden, und die Lichtaustrittsfläche verändert werden. Alternativ können - nicht erfindungsgemäß - OLED-Displayfolien verwendet werden. Dies ermöglicht eine schnelle, elektronische, optische Veränderung der Kabinenoberflächen. Die Kabinenerscheinung kann damit individuell verändert werden.

Der Einsatz von E-Ink-Folien hat den Vorteil von extrem niedrigen elektrischen Leistungen, da die E-Ink-Folien nur beim Schaltvorgang (bistabil) Leistung aufnehmen.

Durch einen speziellen Lagenaufbau, das heißt Auswahl und Abfolge der Schichten, können sowohl behördliche als auch kundenspezifische Anforderungen erfüllt werden. Speziell dies lässt eine Verwendung innerhalb der Flugzeugkabine zu.

Bauteile sind insbesondere: PSU, Sidewall, Decken-Paneel, Smart Sign, zum Beispiel Anzeige einer Waschraumbelegung, Staufach, Akzentlicht / Sitzreihen Nummerierung, Bulkhead / Class Divider.

Für Decken bzw. -Paneele ergibt sich die Möglichkeit eines "Smart-Dekor" bzw. der Darstellung von Logos, zur Anzeige von Passagierinformation, für Werbezwecke, nicht zur Erfindung gehörend mit oder gemäß der Erfindung ohne Hintergrundbeleuchtung (Leuchtschicht, leuchtfähiger Grundkörper, ...). Dies gilt auch für bei Bulkhead / Class Divider und Akzentlicht / Sitzreihenanzeige sowie für Staufächer und Seitenwände. Bei letzteren fällt gegebenenfalls wegen der eventuell begrenzten räumlichen Gegebenheiten die Möglichkeit einer Hintergrundbeleuchtung weg.

Für die PSU (Passagier-Service-Einheit) ergibt sich die Möglichkeit zur Anzeige von Passagierinformation. Eine Hintergrundbeleuchtung ist in der Regel immer wünschenswert. Dagegen besteht die Auswahl einer Touchfunktionalität, zum Beispiel um Leselichter ein- und auszuschalten.

Für Smart-Signs / Placards ergeben sich die gleichen Eigenschaften. Zusätzlich noch die Möglichkeit von Werbeanzeigen. Die wahlweise Touch-Funktionalität gilt zum Beispiel auch für einen Rufknopf für Kabinenpersonal.

Die Brandschutzschicht bzw. brandhemmende Schicht ist ggf. erforderlich, um die behördlichen Brandanforderungen der Luftfahrt zu erfüllen. Die Schutzschicht ist ggf. erforderlich, um behördliche Anforderungen zu erfüllen (zum Beispiel Verträglichkeit gegenüber Reinigungsmitteln, Pestiziden, Fungiziden, bestimmten Säuren und Laugen) weiterhin ist sie erforderlich um kundenspezifische Anforderungen zu erfüllen (zum Beispiel mechanische Stoßfestigkeit).

Die Versteckschicht oder "Hidden Design" - Schicht / Dekor ist ggf. erforderlich, um kundenspezifische Designanforderungen zu erfüllen (zum Beispiel im Aus-Zustand des Displays soll sich die Oberfläche optisch nicht von benachbarten Kabinenoberflächen unterscheiden, aufgebrachte Piktogramme, Schrift,...).

Die Touchpad-Schicht oder das Touchpanel ist ggf. erforderlich, wenn durch Berühren des Bauteils, z.B. als Panel, Schaltzustände ausgelöst werden sollen (zum Beispiel Leselicht ein- / ausschalten, Rufknopf für Kabinenpersonal (Attendant Call Button), Öffnen / Schließen des Gepäckfaches, "Nachleuchten" von berührten Oberflächen). Backlighting, in Form eines leuchtfähigen Abschnitts oder durch Integration einer Leuchtschicht oder einer Aktivschicht in Form einer Leuchtfolie, ist ggf. erforderlich, wenn der Aufbau, also das Bauteil, Licht emittieren soll; oder ist erforderlich bei nicht selbst leuchtenden Displaytechnologien wie E-Ink; ist jedoch nicht notwendig bei - nicht erfindungsgemäßen - selbstleuchtenden Displaytechnologien wie OLED.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
Figur 1 ein Bauteil gemäß einem Basisansatz, welches nicht in den Geltungsbereich der Ansprüche fällt,
Figur 2 ein alternatives Bauteil mit brandhemmender Schicht, welches nicht in den Geltungsbereich der Ansprüche fällt,
Figur 3 ein alternatives Bauteil mit Schutzschicht, welches nicht in den Geltungsbereich der Ansprüche fällt,
Figur 4 ein alternatives Bauteil mit Versteckschicht, welches nicht in den Geltungsbereich der Ansprüche fällt,
Figur 5 ein alternatives Bauteil mit Touchpad-Schicht, welches nicht in den Geltungsbereich der Ansprüche fällt,
Figur 6 ein alternatives Bauteil mit Leuchtschicht, welches nicht in den Geltungsbereich der Ansprüche fällt,
Figur 7 ein alternatives Bauteil mit Touchpad-Schicht in vereinfachter Ausführung, welches nicht in den Geltungsbereich der Ansprüche fällt,
Figur 8 ein alternatives Bauteil mit leuchtfähigem Grundkörper in vereinfachter Ausführung, welches nicht in den Geltungsbereich der Ansprüche fällt,
Figur 9 ein alternatives Bauteil mit Touchpad-Schicht und leuchtfähigem Grundkörper in vereinfachter Ausführung, welches nicht in den Geltungsbereich der Ansprüche fällt,
Figur 10 ein alternatives Bauteil mit Kombinationsschicht, jeweils im Querschnitt,
Figur 11 die Kombinationsschicht aus Figur 10 in Draufsicht.

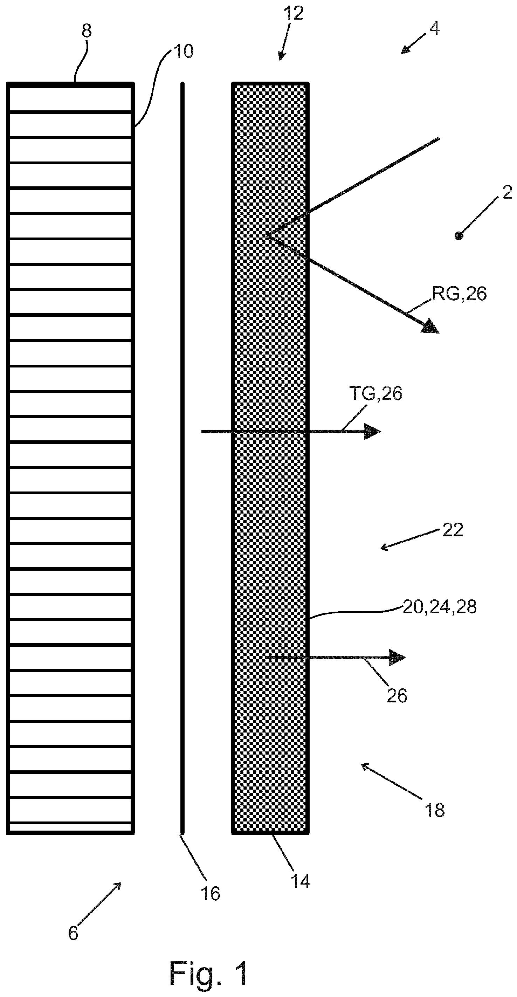

Figur 1 zeigt einen sogenannten Basisansatz für die Erfindung:
Figur 1 zeigt einen Ausschnitt aus einer Passagierkabine 2 eines Passagierflugzeuges 4, wobei beides nicht näher dargestellt ist. Die Passagierkabine 2 enthält ein Bauteil 6, hier ein Paneel einer Seitenwand der Passagierkabine 2. Das Bauteil 6 begrenzt die (in der Figur rechts von diesem liegende) Passagierkabine 2 zu einer (in der Figur links des Bauteils 6 liegenden, nicht dargestellten) Außenwand des Passagierflugzeuges 4 hin. Dieser Schichtaufbau fällt nicht in den Geltungsbereich der Ansprüche.

Das Bauteil 6 weist einen Grundkörper 8 auf. Der Grundkörper 8 weist eine Oberfläche 10 auf, die zur Passagierkabine 2 hin weist. Auf der Oberfläche 10 ist ein Schichtaufbau 12 angebracht. Dieser enthält eine Aktivschicht 14. Der Schichtaufbau 12 enthält auch eine Klebstoffschicht 16. Diese ist zwischen der Aktivschicht 14 und der Oberfläche 10 angeordnet. Die Aktivschicht 14 enthält einen Flächenabschnitt 18, der hier die gesamte Fläche der, also die gesamte Aktivschicht 14 einnimmt. Dieser Flächenabschnitt 18 ist aus einer elektrisch steuerbaren Farbwechselfolie 20 gebildet. Die Farbwechselfolie 20 ist hier eine Displayfolie, im Beispiel eine Passivfolie 24 in Form einer nicht selbstleuchtenden E-Ink-Folie. Die gesamte mit dem Schichtaufbau 12 versehene Oberfläche 10 ist der Passagierkabine 2 zugewandt und bildet die Sichtseite des Bauteils 6 für Passagiere. Die Farbwechselfolie 20 ist - hier als Oberfläche des Schichtaufbaus 12 - daher eine bestimmungsgemäße Sichtfläche 22 in der Passagierkabine 2.

Bei der Passivfolie 24 ist deren Transmissionsgrad TG, angedeutet durch einen Pfeil und / oder deren Reflexionsgrad RG, ebenfalls angedeutet durch einen Pfeil für Licht 26 veränderbar. Dies geschieht durch elektrische Ansteuerung der Passivfolie 24.

Alternativ - nicht erfindungsgemäß - ist die Farbwechselfolie 20 eine steuerbar selbstleuchtende Leuchtfolie 28, welche wahlweise Aktivlicht 26 erzeugt und aussendet, hier eine selbstleuchtende OLED-Folie. Bei dieser ist sowohl steuerbar, ob diese überhaupt Licht 26 erzeugt und aussendet, und auch welcher Art 26 das Licht 26 ist, nämlich ist dessen Helligkeit und Farbe steuerbar. Auch dies geschieht durch elektrische Ansteuerung der Leuchtfolie 28.

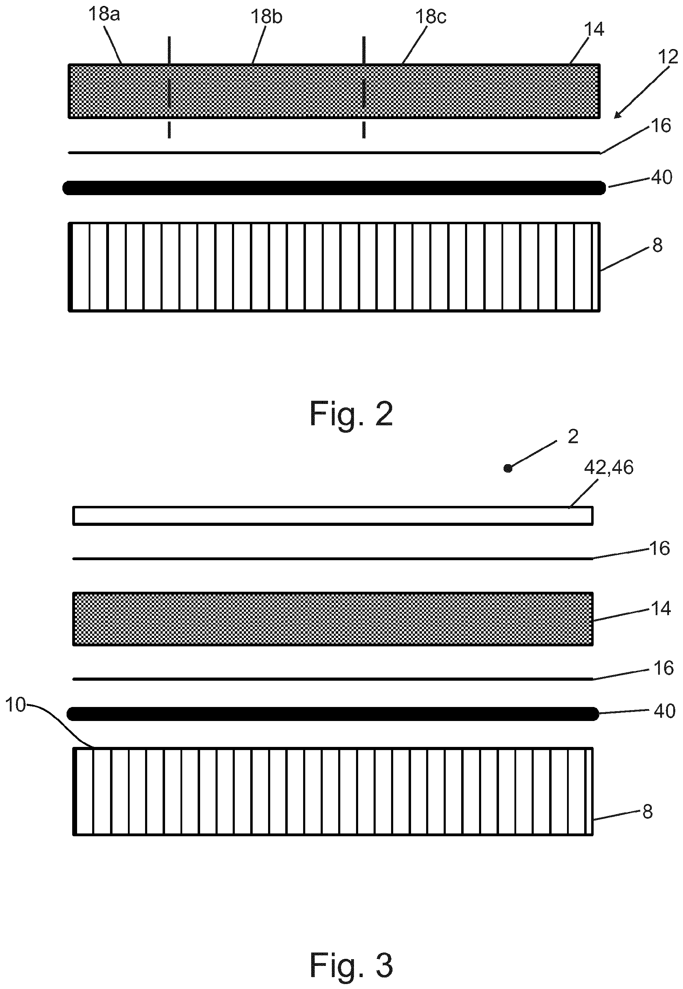

Figur 2 zeigt prinzipiell, doch abgewandelt, den Basisansatz aus Figur 1. Zusätzlich enthält der Schichtaufbau 12 eine brandhemmende Schicht 40, hier zwischen der Aktivschicht 14 und der Oberfläche 10. In Figur 2 ist alternativ eine Aktivschicht 14 gezeigt, welche drei Flächenabschnitte 18a-c aufweist, welche unabhängig voneinander bzw. einzeln ansteuerbar sind, um diese zum Beispiel in ihrem Reflexionsgrad RG oder Transmissionsgrad TG zu verändern oder deren Aussendung von Licht 26 ein- oder auszuschalten oder die Art des ausgesendeten lichtes 26 (Farbe, Helligkeit, ...) zu verändern.

Die Flächenabschnitte 18a-c können hierbei aus der gleichen oder unterschiedlichen Farbwechselfolien 20 aufgebaut sein. Zum Beispiel ist der Flächenabschnitt 18a aus einer Passivfolie 24, die Flächenabschnitte 18b,c aus einer jeweiligen Leuchtfolie 28 gebildet. Dabei sind die Flächenabschnitte 18a-c einzeln elektrisch ansteuerbar, um deren Transmissionsgrad TG und Reflexionsgrad RG zu verändern (Flächenabschnitt 18a) sowie Licht 26 zu erzeugen oder nicht oder dessen Charakter zu verändern (Flächenabschnitte 18b,c). Figur 2 zeigt somit den Basisansatz plus Brandschutzschicht zur Einhaltung von Luftfahrtanforderungen. Dieser Schichtaufbau fällt nicht in den Geltungsbereich der Ansprüche.

Figur 3 zeigt dagegen tatsächlich den Basisansatz aus Figur 1, mit der Brandschutzschicht in Form der brandhemmenden Schicht 40 gemäß Figur 2 sowie mit einer zusätzlichen Schutzschicht 42, die von der Oberfläche 10 abgewandt auf der entsprechenden Gegenseite der Aktivschicht 14 aufgebracht ist. Hier ist eine zusätzliche Klebstoffschicht 16 zwischengefügt. Figur 3 zeigt somit den Basisansatz plus Brandschutzschicht plus Oberflächenschutzschicht zur Einhaltung von Luftfahrtanforderungen. Dieser Schichtaufbau fällt nicht in den Geltungsbereich der Ansprüche.

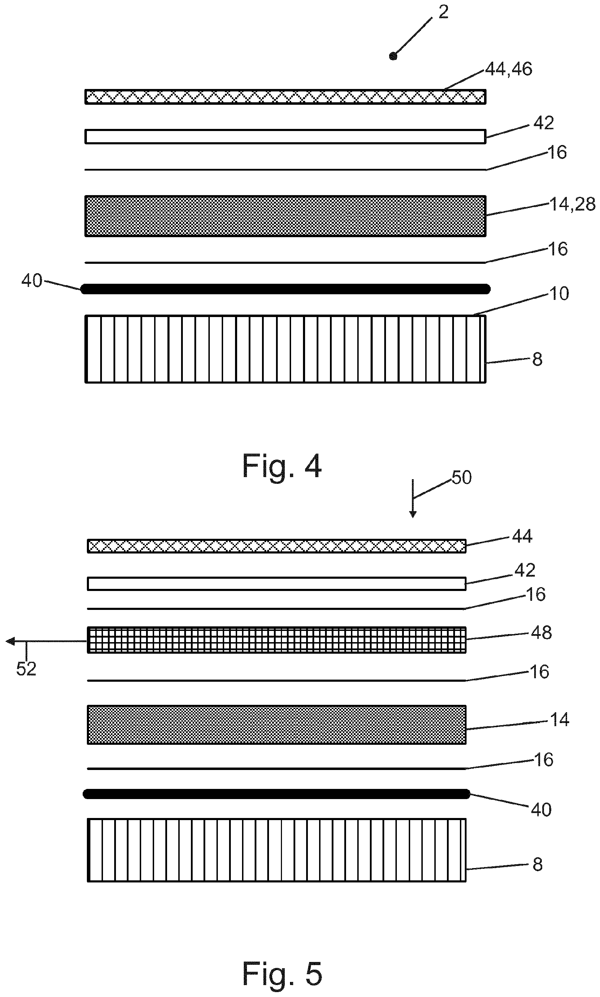

Figur 4 zeigt den Aufbau aus Figur 3, wobei die Schutzschicht 42 zur Passagierkabine 2 hin, also von der Oberfläche 10 abgewandt, noch um eine weitere Schicht in Form einer Versteckschicht 44 bedeckt ist. Diese dient dazu, die Aktivschicht 14 zumindest zeitweise zu verbergen. Die Versteckschicht 44 wird auch "Hidden Design"-Schicht genannt.

Die Aktivschicht 14 ist hier eine Leuchtfolie 28. In deren ausgeschaltetem Zustand dient die Versteckschicht 44 dazu, das Bauteil 6 für einen Betrachter von der Passagierkabine 2 her optisch identisch zu einem - nicht dargestellten - benachbarten herkömmlichen Kabinenbauteil erscheinen zu lassen. Dieses enthält keine Leuchtfolie 28. Somit nimmt der Betrachter in der Passagierkabine 2 bei ausgeschalteter Leuchtfolie 28 eine einheitliche Wandverkleidung wahr, welche neben herkömmlichen Wandverkleidungen auch das erfindungsgemäße Bauteil 6 enthält. Bei Aktivierung der Leuchtfolie 28 erscheint das Bauteil 6 jedoch optisch abweichend von den anderen umgebenden Wandbauteilen, indem es zur Anzeige von Passagierinformationen dient. Figur 4 zeigt somit den Basisansatz plus Brandschutzschicht plus Oberflächenschutzschicht zur Einhaltung von Luftfahrtanforderungen plus Designanforderungen. Dieser Schichtaufbau fällt nicht in den Geltungsbereich der Ansprüche.

In Figur 3 bildet die Schutzschicht 42 eine Deckschicht 46 des Bauteils 6, die das Bauteil zur Passagierkabine 2 hin abschließt. In Figur 4 bildet die Versteckschicht 44 die Deckschicht 46.

Figur 5 zeigt einen gegenüber Figur 4 nochmals erweiterten Aufbau. Hier ist zwischen Schutzschicht 42 und Aktivschicht 14 noch eine Touchpad-Schicht 48 in Form eines Touchpanels integriert. Auf Berührung (auch Druck) 50 hin, die auf das Bauteil 6 ausgeübt wird, angedeutet durch einen Pfeil, steht ein die Berührung 50 repräsentierendes Eingabesignal 52 (durch Pfeil angedeutet) an der Touchpad-Schicht 48 zur Verfügung. Dieses verkörpert somit eine Eingabe eines Benutzers in Form der Berührung 50 (eines Drucks). Dieser Schichtaufbau fällt nicht in den Geltungsbereich der Ansprüche.

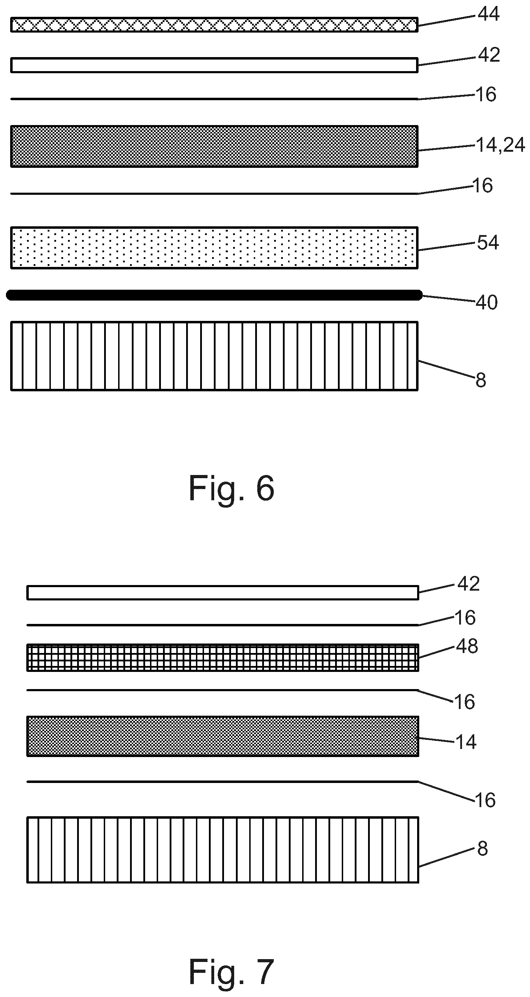

Figur 6 zeigt den Aufbau aus Figur 4, wobei zusätzlich eine aktiv leuchtfähige Leuchtschicht 54 im Schichtaufbau 12 enthalten halten ist. Diese ist hier eine sogenannte Backlighting-Unit. In dieser Ausführungsform ist die Aktivschicht 14 eine nicht selbst Licht 26 erzeugende Passivfolie 24, hier E-Ink-Folie. Diese Aufbauvariante dient einem sogenannten "Backlighting" plus Brandschutzschicht plus Oberflächenschutzschicht zur Einhaltung von Luftanforderungen plus Design-Anforderungen. Dieser Schichtaufbau fällt nicht in den Geltungsbereich der Ansprüche.

Figur 7 zeigt eine vereinfachte Ausführung ohne Brandschutzschicht bei reduzierten Brandschutzanforderungen mit - alternativ / nicht dargestellt - auch ohne Touchpad-Schicht 48, zum Beispiel für Smart-Signs. Dieser Schichtaufbau fällt nicht in den Geltungsbereich der Ansprüche.

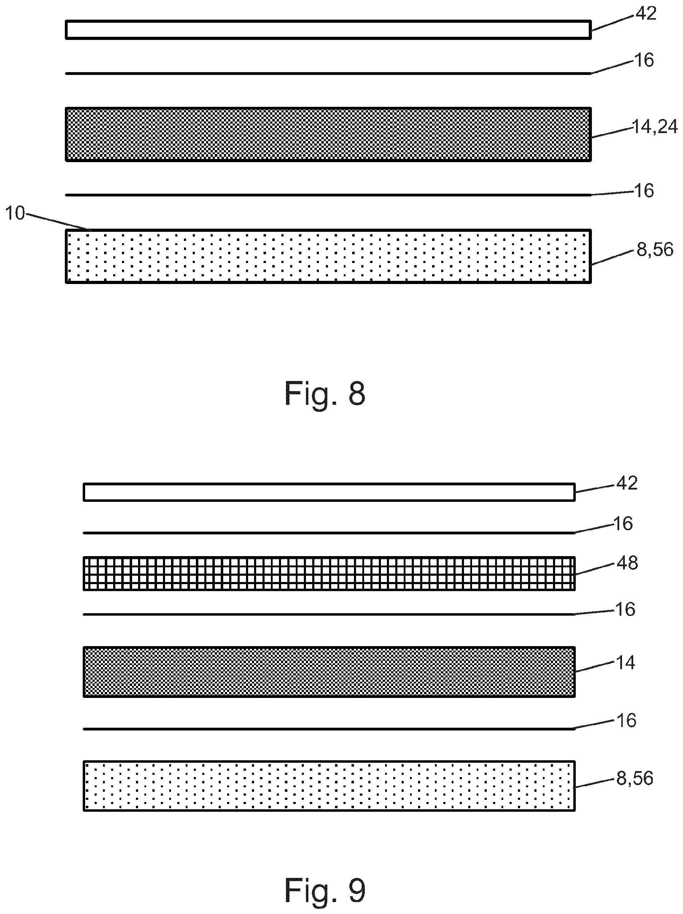

Figur 8 zeigt eine gegenüber Figur 7 wiederum vereinfachte Ausführung mit einer Aktivschicht 14 in Form einer Passivfolie 24, hier E-Ink, wiederum ohne Brandschutzschicht bei reduzierten Brandschutzanforderungen zum Beispiel für Smart-Signs, oder PSU. Hier weist der Grundkörper 8 selbst an seiner Oberfläche 10 einen aktiv leuchtfähigen Abschnitt 56 auf, wobei im Beispiel der Abschnitt 56 auf den gesamten Grundkörper 8 ausgedehnt ist bzw. diesen einnimmt. Der Grundkörper 8 bzw. das Basisteil ist hier also eine Backlighting-Unit. Dieser Schichtaufbau fällt nicht in den Geltungsbereich der Ansprüche.

Figur 9 zeigt eine ebenfalls vereinfachte Ausführung eines Bauteils 6, da auch hier der Grundkörper 8 als leuchtfähiger Abschnitt 56 ausgeführt ist und die Brandschutzschicht fehlt. Gegenüber Figur 8 ist hier jedoch wieder ein Touch Panel in Form einer Touchpad-Schicht 48 integriert, zum Beispiel für Smart-Signs oder eine PSU. Dieser Schichtaufbau fällt nicht in den Geltungsbereich der Ansprüche.

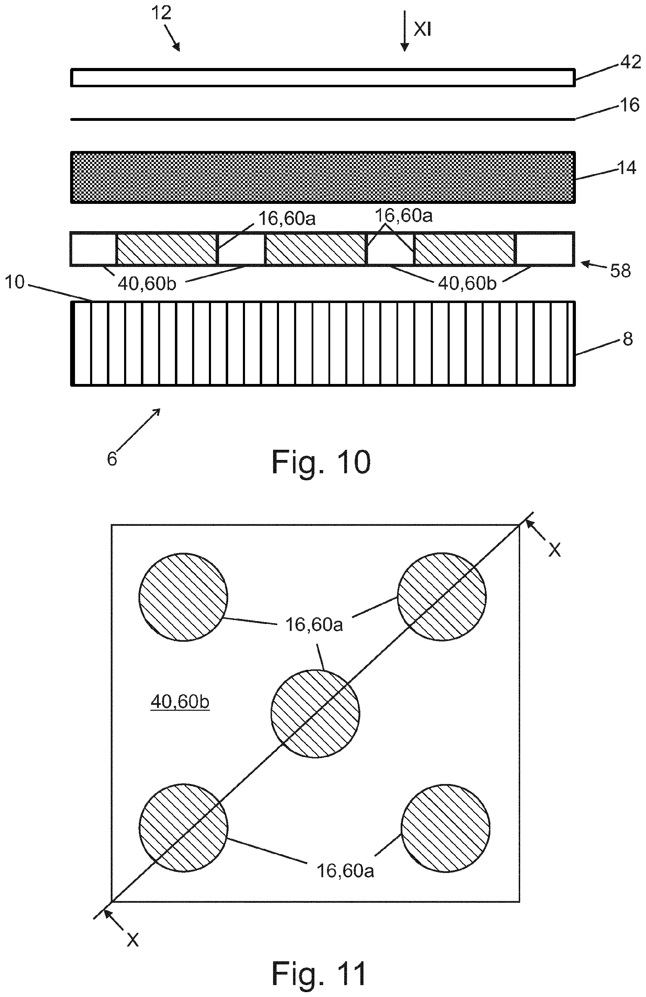

Figur 10 zeigt ein alternatives Bauteil 6, welches dem Grunde nach gemäß Figur 3 mit einem Grundkörper 8 mit Oberfläche 10 und einem Schichtaufbau 12 mit Schutzschicht 42, Aktivschicht 14 und dazwischenliegender Klebstoffschicht 16 aufgebaut ist. Zwischen der Oberfläche 10 und der Aktivschicht 14 ist hier jedoch eine Kombinationsschicht 58 angeordnet, die ebenfalls Teil des Schichtaufbaus 12 ist. Die Kombinationsschicht 58 enthält bzw. ist gebildet zum einen durch eine brandhemmende Schicht 40, zum anderen durch eine weitere Klebstoffschicht 16. Die brandhemmende Schicht 40 ist hier eine ablativ brandhemmende Schicht, und somit eine brandverzögernde Schicht, die eine vergleichsweise geringe Klebefähigkeit aufweist.

Figur 11 zeigt die Kombinationsschicht 58 alleine in Draufsicht in Richtung des Pfeils XI in Fig. 10. Dargestellt ist auch die Schnittlinie X, die den Verlauf der Schnittdarstellung Figur 10 andeutet.

Die beiden Schichten brandhemmende Schicht 40 und Klebstoffschicht 16 sind jeweils nicht vollflächig ausgeführt, sondern aus Teilflächen 60a,b zusammengesetzt. Die Teilflächen 60a bilden hierbei die Klebstoffschicht 16, die (hier einzige) Teilfläche 60b bildet die brandhemmende Schicht 40. Mit anderen Worten sind die Teilflächen 60a als Aussparungen in der brandhemmenden Schicht 40 vorgesehen und mit Klebstoff der Klebstoffschicht 16 "gefüllt". So wird erreicht, dass die Aktivschicht 14 bzw. der Teilaufbau aus Aktivschicht 14 und Schutzschicht 42 (einschließlich verbindender Klebstoffschicht 16) dank der weiteren Klebstoffschicht 16 in den Teilflächen 60a (deren Anteile an der Kombinationsschicht 58) ausreichend an der Oberfläche 10 des Grundkörpers 8 befestigt bzw. angeklebt ist. Die brandhemmende Schicht 40 alleine, wenn sie also vollflächig ausgeführt wäre, könnte eine entsprechend starke Klebewirkung gegebenenfalls nicht erzielen. Der Anteil der Klebstoffschicht 16 in der Kombinationsschicht 58 dient also zur Verbindung der jeweils angrenzenden benachbarten Schichten (Grundkörper 8 mit Oberfläche 10 / Aktivschicht 14). Die verbleibende ("gelochte") Brandschutzschicht 40 in Form der Teiflläche 60b reicht jedoch aus, um die gewünschte Brandhemmung im Bauteil 6 zu erzielen.

Die Kombinationsschicht 58 weist eine Dicke von ca. 500 µm auf. Die Aktivschicht 14 ist hier eine Displayfolie, hier eine nicht selbstleuchtende E-Ink, alternativ - nicht erfindungsgemäß - eine selbstleuchtende OLED. Die Klebstoffschicht 16 zwischen Aktivschicht 14 und Schutzschicht 42 ist hier aus transparentem Klebstoff gebildet. Die Schutzschicht 42 ist hier aus Glas, alternativ aus kratzfestem Kunststoff gebildet und weist eine Dicke von weniger als 1 mm auf.

### Bezugszeichenliste

- 2: Passagierkabine
- 4: Passagierflugzeug
- 6: Bauteil
- 8: Grundkörper
- 10: Oberfläche
- 12: Schichtaufbau
- 14: Aktivschicht
- 16: Klebstoffschicht
- 18,a-c: Flächenabschnitt
- 20: Farbwechselfolie
- 22: Sichtfläche
- 24: Passivfolie
- 26: Licht
- 28: Leuchtfolie
- 40: brandhemmende Schicht
- 42: Schutzschicht
- 44: Versteckschicht
- 46: Deckschicht
- 48: Touchpad-Schicht
- 50: Berührung
- 52: Eingabesignal
- 54: Leuchtschicht
- 56: Abschnitt (Grundkörper, leuchtfähig)
- 58: Kombinationsschicht
- 60a,b: Teilfläche

- TG: Transmissionsgrad
- RG: Reflexionsgrad

## Patentansprüche

1. Bauteil (6) für eine Passagierkabine (2) eines Passagierflugzeuges (4),
- mit einem Grundkörper (8) mit einer Oberfläche (10),
- und mit einem auf der Oberfläche (10) angebrachten Schichtaufbau (12), der wenigstens zwei Schichten in Form mindestens einer Aktivschicht (14) und einer zwischen der Aktivschicht (14) und der Oberfläche (10) angeordnete Klebstoffschicht (16) enthält,
- wobei die Aktivschicht (14) wenigstens einen Flächenabschnitt (18a-c) enthält, der aus einer elektrisch steuerbaren Farbwechselfolie (20) gebildet ist,
- wobei zumindest ein Teil der Farbwechselfolie (20) eine bestimmungsgemäße Sichtfläche (22) in der Passagierkabine (2) bildet,
- wobei die Farbwechselfolie (20) eine in ihrem Transmissionsgrad (TG) und/oder Reflexionsgrad (RG) für Licht (26) veränderbare nicht selbstleuchtende Passivfolie (24) ist,
- wobei das Bauteil eine Seitenwand, eine Decke, eine Wand eines Gepäckfaches, ein Raumteiler oder eine Partition oder zumindest ein jeweiliger Abschnitt davon ist,
- wobei das Bauteil (6) ohne Hintergrundbeleuchtung ausgeführt ist,
- wobei der Schichtaufbau (12) optional eine Schutzschicht (42) für die Aktivschicht (14) enthält,
- wobei - falls vorhanden - die Schutzschicht (42) eine abschließende Deckschicht (46) des Bauteils ist,
**dadurch gekennzeichnet, dass** der Schichtaufbau (12) eine brandhemmende Schicht (40) enthält,
- wobei die brandhemmende Schicht und die Klebstoffschicht eine gemeinsame Kombinationsschicht (58) bilden,
- wobei die Kombinationsschicht nebeneinander angeordnete Teilflächen enthält, wobei wenigstens eine der Teilflächen zumindest ein Abschnitt der Klebstoffschicht und wenigstens eine der Teilflächen zumindest ein Abschnitt der brandhemmenden Schicht ist.

2. Bauteil (6) nach einem der vorhergehenden Ansprüche,
**dadurch gekennzeichnet, dass**
die Aktivschicht (14) mehrere, nebeneinander angeordnete Flächenabschnitte (18a-c) von Farbwechselfolien (20) enthält.

3. Bauteil (6) nach Anspruch 2,
**dadurch gekennzeichnet, dass**
wenigstens zwei der Flächenabschnitte (18a-c) einzeln ansteuerbar sind.

4. Bauteil (6) nach einem der vorhergehenden Ansprüche,
**dadurch gekennzeichnet, dass**
zumindest ein Teil der brandhemmenden Schicht ein ablativ brandhemmendes Material enthält.

5. Bauteil nach einem der vorhergehenden Ansprüche,
**dadurch gekennzeichnet, dass**
der Schichtaufbau eine Touchpad-Schicht (48) enthält, an der auf Berührung oder Druck (50) hin ein Eingabesignal (52) zur Verfügung steht.

## Claims

1. Component (6) for a passenger cabin (2) of a passenger aircraft (4),
- having a base body (8) with a surface (10),
- and having a layer structure (12), which is applied to the surface (10) and contains at least two layers in the form of at least one active layer (14) and one adhesive layer (16) arranged between the active layer (14) and the surface (10),
- wherein the active layer (14) contains at least one surface portion (18a-c) which is formed from an electrically controllable colour-changing film (20),
- wherein at least a part of the colour-changing film (20) forms an as-intended visible surface (22) in the passenger cabin (2),
- wherein the colour-changing film (20) is a passive film (24) which can be changed in terms of its transmittance (TG) and/or reflectance (RG) for light (26) and does not itself generate light,
- wherein the component is a side wall, a ceiling, a wall of a luggage compartment, a room divider or a partition, or at least a respective portion thereof,
- wherein the component (6) is designed without a backlight,
- wherein the layer structure (12) optionally contains a protective layer (42) for the active layer (14),
- wherein - if present - the protective layer (42) is a terminating covering layer (46) of the component,
**characterized in that**
the layer structure (12) contains a fire-retardant layer (40),
- wherein the fire-retardant layer and the adhesive layer form a common combination layer (58),
- wherein the combination layer contains partial surfaces arranged next to one another, wherein at least one of the partial surfaces is at least a portion of the adhesive layer and at least one of the partial surfaces is at least a portion of the fire-retardant layer.

2. Component (6) according to one of the preceding claims,
**characterized in that**
the active layer (14) contains a plurality of surface portions (18a-c) of colour-changing films (20) arranged next to one another.

3. Component (6) according to Claim 2,
**characterized in that**
at least two of the surface portions (18a-c) can be activated individually.

4. Component (6) according to one of the preceding claims,
**characterized in that**
at least a part of the fire-retardant layer contains an ablatively fire-retardant material.

5. Component according to one of the preceding claims,
**characterized in that**
the layer structure contains a touchpad layer (48), on which an input signal (52) is available in response to touch or pressure (50).

## Revendications

1. Composant (6) pour une cabine des passagers (2) d'un avion de ligne (4),
- comprenant un corps de base (8) pourvu d'une surface (10),
- et d'une structure en couches (12) appliquée à la surface (10) et contenant au moins deux couches sous la forme d'au moins une couche active (14) et d'une couche adhésive (16) disposée entre la couche active (14) et la surface (10),
- dans lequel la couche active (14) contient au moins une partie de surface (18a-c) qui est formée à partir d'un film de changement de couleur (20) pouvant être commandé électriquement,
- dans lequel au moins une partie du film de changement de couleur (20) constitue une surface d'aspect (22) conforme dans la cabine des passagers (2),
- dans lequel le film de changement de couleur (20) est un film passif (24) non auto-lumineux, variable au niveau de son facteur de transmission (TG) et/ou de son facteur de réflexion (RG) pour la lumière (26),
- dans lequel le composant est une paroi latérale, un plafond, une paroi d'un compartiment à bagages, un séparateur ou une cloison ou du moins une potion respective de ceux-ci,
- dans lequel le composant (6) est réalisé sans rétro-éclairage,
- dans lequel la structure en couches (12) contient en option une couche de protection (42) pour la couche active (14),
- dans lequel - le cas échéant - la couche de protection (42) est une couche de couverture (46) finale du composant,
**caractérisé en ce que**
la structure en couches (12) contient une couche pare-feu (40),
- dans lequel la couche pare-feu et la couche adhésive constituent une couche combinée (58) commune,
- dans lequel la couche combinée contient des surfaces partielles disposées côte à côte, au moins l'une des surfaces partielles étant au moins une partie de la couche adhésive et au moins l'une des surfaces partielles est au moins une partie de la couche pare-feu.

2. Composant (6) selon l'une quelconque des revendications précédentes,
**caractérisé en ce que**
la couche active (14) contient plusieurs parties de surface (18a-c) disposées côte à côte de films de changement de couleur (20).

3. Composant (6) selon la revendication 2,
**caractérisé en ce que**
au moins deux des parties de surface (18a-c) peuvent être commandées individuellement.

4. Composant (6) selon l'une quelconque des revendications précédentes,
**caractérisé en ce que**
au moins une partie de la couche pare-feu contient un matériau pare-feu par ablation.

5. Composant selon l'une quelconque des revendications précédentes,
**caractérisé en ce que**
la structure en couches contient une couche tactile (48) sur laquelle un signal d'entrée (52) est disponible suite à un contact ou une pression (50).
